Europäisches Patentamt

European Patent Office

Office européen des brevets

(19)

(11) **EP 0 497 428 B1**

(12) **EUROPEAN PATENT SPECIFICATION**

(45) Date of publication and mention
of the grant of the patent:
**03.09.1997 Bulletin 1997/36**

(51) Int Cl.⁶: **H04N 7/18**, G01S 3/786

(21) Application number: **92200260.5**

(22) Date of filing: **30.01.1992**

(54) **Interphone with television**

Türfernsprechstelle mit Fernsehsystem

Système d'interphone avec télévision

(84) Designated Contracting States:
**DE FR GB**

(30) Priority: **31.01.1991 JP 10695/91**
**31.07.1991 JP 191730/91**

(43) Date of publication of application:
**05.08.1992 Bulletin 1992/32**

(73) Proprietor: **MATSUSHITA ELECTRIC WORKS,
LTD.
Kadoma-shi Osaka 571 (JP)**

(72) Inventors:
• **Palm, Stephen Ray
1048, Oaza-Kadoma, Kadoma-shi,
Osaka 571 (JP)**
• **Furukawa, Satoshi
1048, Oaza-Kadoma, Kadoma-shi,
Osaka 571 (JP)**
• **Hagio, Kenichi
1048, Oaza-Kadoma, Kadoma-shi,
Osaka 571 (JP)**

(74) Representative: **Kupecz, Arpad et al
Octrooibureau Los en Stigter B.V.
Postbox 20052
1000 HB Amsterdam (NL)**

(56) References cited:
EP-A- 0 111 909          EP-A- 0 208 448
EP-A- 0 293 293          EP-A- 0 309 002
GB-A- 2 215 552          US-A- 4 618 887
US-A- 4 689 526          US-A- 4 736 399

• PATENT ABSTRACTS OF JAPAN vol. 14, no. 414
(E-975)7 September 1990 & JP-A-02 159 187

• PATENT ABSTRACTS OF JAPAN vol. 11, no. 220
(E-524)16 July 1987 & JP-A-62 038 685
• PATENT ABSTRACTS OF JAPAN vol. 14, no. 515
(E-1000)13 November 1990 & JP-A-02 214 392
• PATENT ABSTRACTS OF JAPAN vol. 12, no. 486
(E-695)19 December 1988 & JP-A-63 200 673
• PATENT ABSTRACTS OF JAPAN vol. 14, no. 580
(E-1017)25 December 1990 & JP-A-02 252 375
• PATENT ABSTRACTS OF JAPAN vol. 14, no. 189
(P-1037)17 April 1990 & JP-A-02 035 490
• PATENT ABSTRACTS OF JAPAN vol. 11, no. 288
(E-542)17 September 1987 & JP-A-62 086 974
• PATENT ABSTRACTS OF JAPAN vol. 12, no. 287
(E-643)5 August 1988 & JP-A-63 062 496
• PATENT ABSTRACTS OF JAPAN vol. 12, no. 280
(P-739)2 August 1988 & JP-A-63 061 302
• PATENT ABSTRACTS OF JAPAN vol. 7, no. 138
(P-204)16 June 1983 & JP-A-58 053 707
• PATENT ABSTRACTS OF JAPAN vol. 10, no. 35
(E-380)12 February 1986 & JP-A-60 192 479
• PATENT ABSTRACTS OF JAPAN vol. 14, no. 534
(P-1135)26 November 1990& JP-A-02 227 686
• PATENT ABSTRACTS OF JAPAN vol. 12, no. 97
(P-682)30 March 1988 & JP-A-62 231 190
• PATENT ABSTRACTS OF JAPAN vol. 9, no. 95
(E-310)24 April 1985 & JP-A-59 221 191
• PATENT ABSTRACTS OF JAPAN vol. 14, no. 303
(P-1070)29 June 1990 & JP-A-02 096 681
• PATENT ABSTRACTS OF JAPAN vol. 12, no. 394
(P-773)20 October 1988 & JP-A-63 134 974
• PATENT ABSTRACTS OF JAPAN vol. 9, no. 131
(E-319)6 June 1985 & JP-A-60 016 777
• PATENT ABSTRACTS OF JAPAN vol. 6, no. 47
(E-99)26 March 1982 & JP-A-56 162 585
• PATENT ABSTRACTS OF JAPAN vol. 11, no. 11
(E-470)13 January 1987 & JP-A-61 184 983
• PATENT ABSTRACTS OF JAPAN vol. 11, no. 312
(E-548)12 October 1987 & JP-A-62 104 383

## Description

### BACKGROUND OF THE INVENTION

This invention relates generally to interphones equipped with a television monitor and, more particularly, to an interphone with a television monitor which allows an image of a visitor taken by a television camera at the porch, gate or the like of general houses, building or the like to be monitored in the interior of the houses or the like.

### DESCRIPTION OF RELATED ART

Conventionally, the interphone with television of the kind referred to generally comprises a terminal device incorporating a television camera and installed at the entrance porch, gate or the like of general houses, buildings or the like, and a master device incorporating a television monitor and installed inside the house or the like so that an image of the visitor standing in front of the porch or the like place can be taken by the camera and reproduced on the monitor of the master device to be visually confirmed by the dweller. Further, the interphone is equipped with means for adjusting visible angle of the camera in accordance with the position where the visitor stands at the porch or any difference in the height between a plurality of visitors.

With the above arrangement of the interphone, however, the visible angle of the television camera has been required to be adjusted at every time when a new visitor comes to stand in front of the porch or the like so as to render the operation to be rather complicated, the adjusting means has required to be formed with high precision machines and parts, and there has involved a trouble in rendering manufacturing costs to be high.

As a countermeasure, M. Higashio et al have suggested in Japanese Patent Laid-open Publication JP-A-2-114786 an interphone with television having an image-taking zone of the television camera set to be larger so that the image of the visitor can be taken irrespective of any difference in the position where the visitor stands or in the height of the respective visitors and a face portion in the image taken can be scrolled. In this interphone suggested, however, it has been difficult to maintain the quality of the image to be high in the event when, for example, the visitor's face portion is scrolled, since the image signal from an image input means is not subjected to a correction processing a picture distortion, and there has been left the problem in respect of the precision of visual confirmation unsolved.

GB-A-2 215 552 (Sony Corp.) discloses in Fig. 5 and the accompanying descriptive text an address generator (2) for generating under the control of a mapping function (3) X and Y-addresses for an output memory (1). The address generator (2) operates to calculate the addresses of the points, to which the mapping function will cause each sample position in an input sample array to be mapped. Each mapped address X, Y is supplied to a processor (4), which cooperates with a coefficient look-up table (5), which may be a PROM, and supplies weighting coefficients to an interpolator (6), to which the 8-bit input data words are also supplied. The coefficient look-up table (5) and the interpolator (6) together caculate from the current field, that is the input sample array, a sample value for the output sample position, which calculated sample value a is supplied to the memory (1) to be stored at the location corresponding to the appropriate address X, Y for subsequent read-out when the field stored therein is to be displayed, recorded or transmitted.

US-A-4 736 399 discloses an X-ray imaging apparatus which can closely approximate the original object by correcting the spatial distortion. In attaining the correction, the vertical and horizontal distortions are both processed.

US-A-4 689 526 (Schweer) discloses a deflection correction of television picture tubes. Here, the video signals are read into a memory which is addressable via read-in and read-out addresses, at the frequency of a clock signal, and read out from this memory in such a way that the readout addresses are activated at a frequency increased in accordance with a correction value. The corrected video signal is then fed to digital-to-analog converters.

### SUMMARY OF THE INVENTION

A primary object of the present invention is, therefore, to provide an interphone with television which is made to be capable of sufficiently improving the image quality upon reproduction on the monitor.

According to the present invention starting from a known interphone in accordance with the preamble of claim 1 of this patent specification, this object is realized in that the master device further comprises means for generating horizontal and vertical addresses to be provided to said image memory from the image signal supplied from said terminal device, the vertical addresses being generated by counting the horizontal synchronous signals as separated from the image signal, the horizontal addresses being generated by counting sampling clocks of picture elements supplied by said master device, said sampling clocks being synchronized with said horizontal synchronous signals; and means for converting the horizontal addresses into corrected horizontal addresses on the basis of predetermined distortion characteristics of the wide angle image due to the wide angle lens, the image signal being written into said image memory by means of the corrected horizontal addresses and the vertical addresses and read out by means of ordinary sequential addresses so that the horizontal direction is corrected on a real time basis, and the corrected image displayed on said monitor for an improved visual presentation of the visitor's image.

Other objects and advantages of the present invention shall be made clear in following description of the invention detailed with reference to accompanying drawings.

## BRIEF DESCRIPTION OF THE DRAWINGS

FIGURE 1 shows a block circuit diagram of an interphone with television for explaining the background of the present invention;

FIGS. 2 and 3 are explanatory views for the operation of the interphone of FIG. 1;

FIG. 4 is a block circuit diagram showing an embodiment of the interphone according to the present invention;

FIGS. 5 and 6 are explanatory views for the operation of the interphone shown in FIG. 4;

FIG. 7 is a block circuit diagram showing another embodiment of the interphone according to the present invention; and

FIGS. 8 to 10 are explanatory views for the operation of the interphone of FIG. 7.

## DETAILED DESCRIPTION OF THE PREFERRED EMBODIMENTS

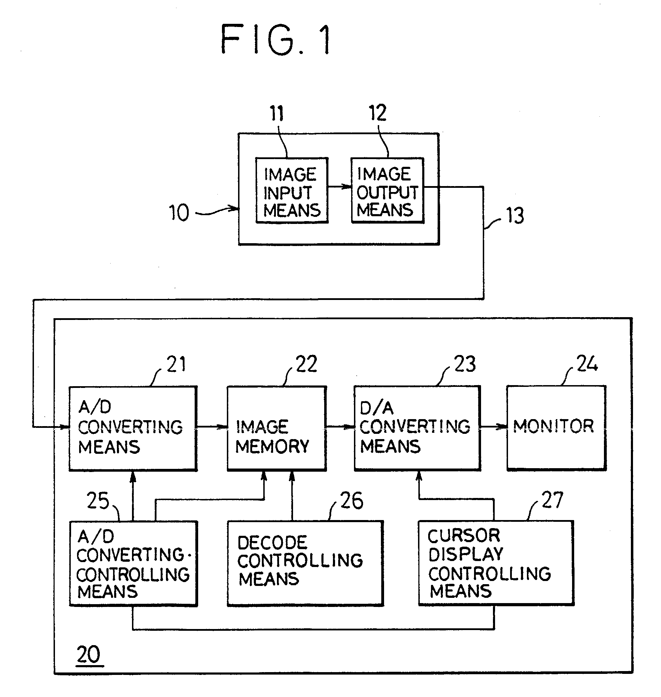

Referring to FIG. 1, there is shown an embodiment of an interphone in which the interphone includes a terminal device 10 to be installed outside the entrance porch, gate or the like position of general houses for providing an image signal, and a master device 20 installed inside the porch or the like house position for receiving the image signal from the terminal device 10.

The terminal device 10 comprises an image input means 11 for taking an image of the visitor at the porch or the like position, and an image output means 12 for receiving an image signal from the image input means 11 and transmitting the image signal towards the master device 20. This image output means 12 is connected to the master device 20 through such simpler wires in pair as telephone wires utilized as a transmission line 13. When a supplied power from a power source is superposed on the image signal by means of the transmission line 13, a balancing circuit may be provided with respect to the transmission line 13. Further, it is preferable to employ a CCD image device as the image input means in respect of manufacturing costs and stability, and it is desired to set image-taking angle to be wide enough for absorbing any difference in the standing position or in the height between a plurality of visitors.

On the other hand, the master device 20 includes an A/D converting means 21 directly connected to the transmission line 13 to receive the image signal from the output means 12 of the terminal device 10, and an A/D conversion controlling means 25 for providing to the A/D converting means 21 a sampling signal in accordance with which the converting means 21 provides digital image data of, for example, 8 bits per 1 picture element. The digital image data are once stored in an image memory 22 which has a memory size of, for example, 512 x 512 or 256 x 256. The digital image data stored in the image memory 22 are read out by means of a read signal from a read or decode controlling means 26 to be converted at a D/A converting means 23 into an analogue image signal which is provided to a monitor 24 to be reproduced as a monitoring image.

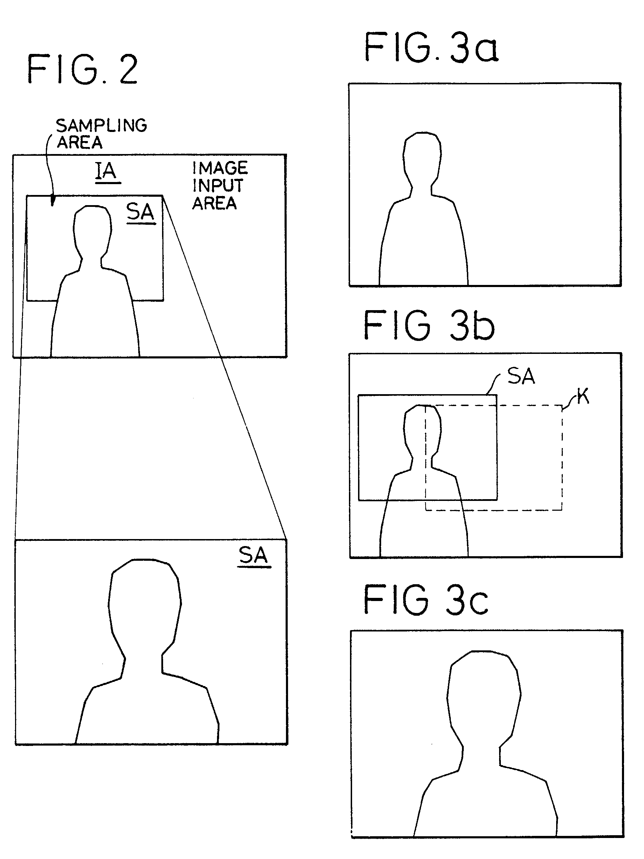

The A/D conversion controlling means 25 generates a sampling pulse for the digital conversion only during a sampling zone in the image signal. Here, the sampling zone is such fragmentary zone within an image input area IA as shown in FIG. 2, the fragmentary zone being the one to be temporarily held in the image memory 22 for a magnified display, an area SA denoted by a rectangular shape having the same aspect ratio as the image area IA to be reproduced on the monitor 24. This sampling area SA can be set as desired by disposing a cursor of a predetermined size at a desired position by means of a cursor display controlling means 27.

A writing of the sampling area SA into the image memory 22 is to be performed by generating the sampling pluse during the predetermined period within a vertical period on the basis of a control signal from the cursor display controlling means 27. The sampling pulse generated from the A/D conversion controlling means 25 is employed at the A/D converting means 21 as a sampling signal and also at the image memory 22 as a writing signal. Therefore, the number of the sampling pulses and the size of the image memory 22 may be made equal, for example, 256 x 256 in common. With this arrangement, the image memory 22 is not required to store the whole of the image sight but is provided only with a capacity enough for the sampling area, so as to allow the memory capacity to be reduced.

At the decode controlling means 26, there is provided the read signal for reading at a next frame the digital image data of the sampling area SA stored in the image memory 22, upon which the reading is to be carried out at a different timing from the writing for the purpose of the magnified display. Generally, the image signal commonly employed is of the scanning lines of 525, but the size of the image memory 22 in the vertical direction is 256 lines which are 1/2 of the scanning lines, so that 1 picture is formed by reading twice the same contents. That is, in the vertical direction, the same contents are to be displayed over two fields of the interlace, and the same contents are caused to be laid along two lines, consequent to which the predetermined fragmentary portion of the initial image can be displayed as magnified over the entire screen of the monitor 24 as seen in FIG. 2.

Referring next to the operational sequence of the interphone, such image of a wide angled sight as seen in FIG. 3a is reproduced on the monitor 24 as the visitor enters in the image input area of the image input means 11. Here, the dweller sets the sampling area SA on the screen of the monitor 24 by shifting, as shown in FIG. 3b, the cursor K denoted by a dotted line and having an area enough for covering the bust of the visitor in the monitored image to a position of enclosing the bust of the visitor as denoted by a solid line in FIG. 3b. In this state, the set sampling area SA is magnified to reproduce the bust over the entire screen of the monitor 24. While, in the foregoing arrangement, the image memory 22 has been referred to as being single in which event the frame to be input in the image memory 22 and the frame to be displayed as magnified are made alternate so as to cause a slight flicker to be apt to occur in the reproduced image, the image quality is improved by means of the digitallizing of the image signal so long as the arrangement is employed as the interphone with television, to be good enough for allowing the dweller to reliably visibly confirm the visitor, and no practical problem is involved. In the event when such flicker is intended to be prevented, two sheets of the image memory 22 are provided for alternate use as changed over to repeat the input image display and magnified image display and a complete image reproduction can be attained as will be readily appreciated.

While the utilization of the wide-angled sight may cause a risk that the image is distorted by the use of a wide-angle lens system to have a distortion involved in the reproduced picture, an arrangement effective to remove this picture distortion is provided according to one of remarkable features of the present invention.

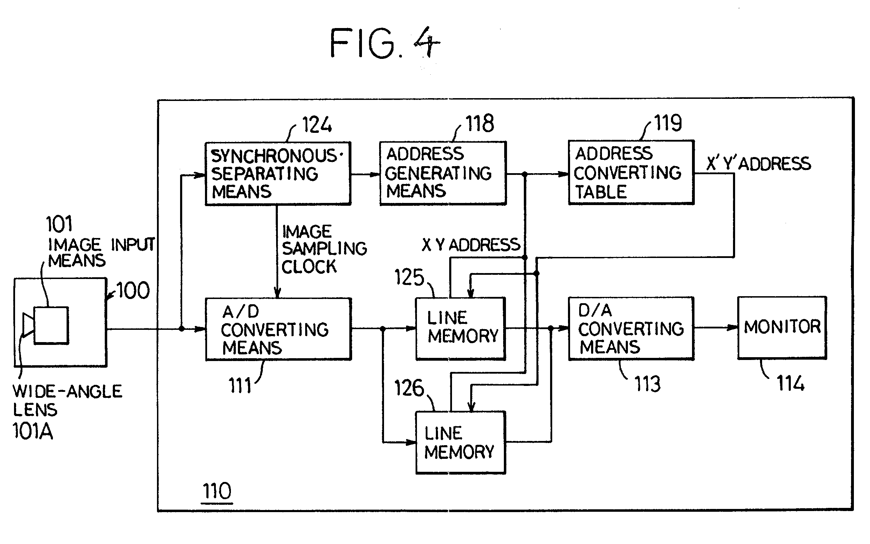

In FIG. 4, there is shown an embodiment in accordance with the invention for eliminating the monitored image distortion, in which the image signal from the terminal device 100 is provided to the A/D converting means 111 and also to a synchronous separating means 124 in the master device 110. At the synchronous separating means 124, synchronous signal in the horizontal and vertical directions is extracted out of the image signal, and a picture-element sampling clock synchronizing with the horizontal synchronous signal is sequentially generated. At the address generating means 118 to which the picture-element sampling clocks are sequentially provided, the clocks are counted to generate a horizontal address (X address) and the horizontal synchronous signals are counted to generate a vertical address (Y address). In the address converting table 119 to which the X and Y addresses are provided, there are written address converting data on the respective picture elements along the distortion characteristics due to the wide angle lens system and, in order to simplify the arrangement for correcting the distortion, the arrangement is so made as to convert only the X address, that is, the horizontal address. Therefore, while the X' and Y' addresses are obtained in the case where the picture element having the X and Y addresses is subjected to the conversion at the address converting table 119, the Y' address is made to be of the same value as the Y address.

In the A/D converting means 111, on the other hand, digital image data are formed by the image sampling clocks provided from the synchronous separating means 124 and are provided to line memories 125 and 126. While the data are stored in these line memories 125 and 126 for every horizontal line, they are stored at this time at positions appointed by the horizontal addresses X' provided from the address converting table 119. In this case, the data writing into the memories 125 and 126 is made to be of a random access because of the address conversion being made. The arrangement is also so made that, simultaneously with the writing of the one line, the data will be provided to the D/A converting means 113 from the other line memory in which the data on a previous line are stored. That is, these two line memories 125 and 126 are alternately operated so that, when one of them is in the writing state, the other will be in the reading state, and the writing and reading of the sequential horizontal line data of the image signal can be realized in a smooth manner. In the present embodiment, therefore, the two line memories 125 and 126 are caused to operate as a sort of alternate buffers, and a real time address correction is made possible, without impairing the throughput of the sequential horizontal line data of the image.

Further, the image data made to be the analogue signals at the D/A converting means 123 are provided to the monitor 114 for being reproduced thereon as the image corrected in respect of the distortion. In the foregoing arrangement the address correction is carried out upon writing of the data into the line memories 125 and 126 and their reading is executed with ordinary sequential addresses.

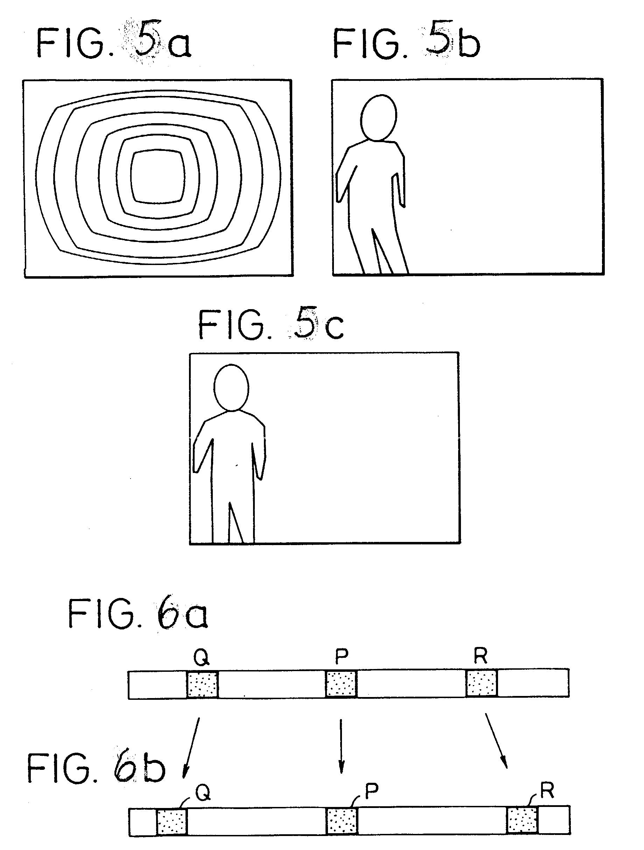

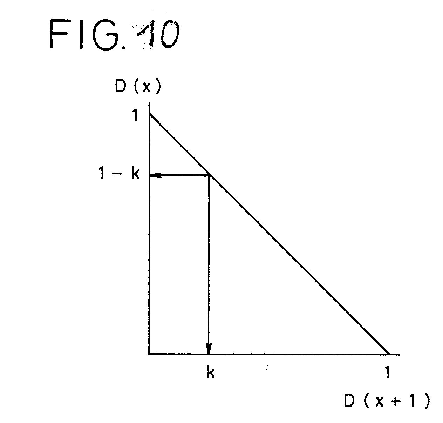

Referring next to the correction of the distortion in the present embodiment with reference to FIG. 4 in conjunction with FIG. 5, such barrel form distortion due to the wide angle lens as shown in FIG. 5a shows a characteristic of increasing the distortion as further separating from the center of the screen and image portions closer to respective corners of the screen are caused to approach the center of the screen as seen in FIG. 5b in contrast to their positions in the image involving no distortion. In correcting such distortion, therefore, the picture elements of the corner portions are to be shifted in directions of discharging out of the screen so that the correction can be executed in equivalent manner. The correction with such shifting of the picture elements should allow a highly precise correction to be realized when executed in both of the horizontal and vertical directions, but, in the interphone with television, it suffices the purpose if the confirmation of individuality can be sufficiently performed, and the shifting of the picture elements only in the horizontal direction is performed so as to attempt the simplification of the correcting arrangement. Here, the image to be taken is mainly of the visitor standing in front of the terminal device 100 or an area convering the visitor's face which is substantially symmetrical with respect to a vertical line. Therefore, when an image in a state shown in FIG. 10b is subjected to a correction of the distortion in the horizontal directions, it has been found that the corrected image will be such one of as shown in FIG. 5c, which involves no remarkable influence on the visual confirmation of the visitor even when any slight distortion in the vertical directions remains.

The foregoing barrel form distortion becomes more remarkable as peripheral side edges of the image or of the screen approach, and thus the distortion at both end portions of every horizontal line will be larger and remarkable. Accordingly, the address conversion for the correction of such distortion should correspond to the magnitude of the distortion, so that the extent of shifting of the picture element will have to be made larger as the element is at closer position to the both ends of every horizontal line. That is, when the respective picture elements P, Q and R generated at the address generating means 118 for the image data of one horizontal line component are as shown in FIG. 11a, the addresses of these picture elements P, Q and R converted at the address converting table 119 will be as shown in FIG. 11b, in which the picture element P at the center of the horizontal line is caused to involve substantially no shift while the picture element Q closer to the left side end of the line and the picture element R closer to the right side end of the line are shifted to be more closer to the left and right side ends, and the correction of distortion is to be executed in conformity to such extent of the shift.

In the embodiment of FIG. 4, other arrangements and functions of the interphone are the same as those in the embodiment of FIG. 1.

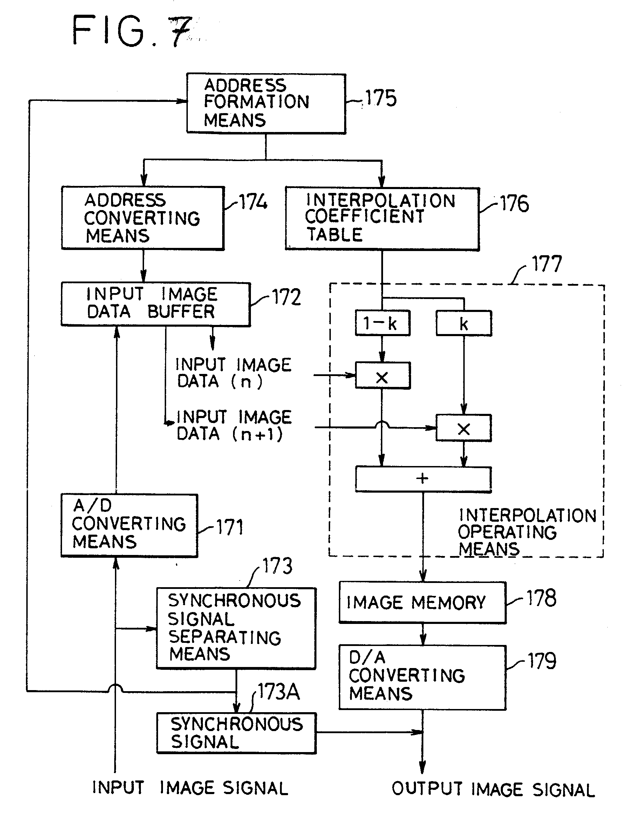

In still another embodiment of the interphone with television according to the present invention, a more excellent improvement in respect of the distortion of the reproduced image can be realized. Referring more specifically to this embodiment by references to FIG. 7, the input image signal from the terminal device and digitalized at the A/D converting means 171 is provided to an input image buffer 172 which comprises, for example, an FIFO memory into which the digitalized image signal is written for every horizontal line in synchronism with an A/D conversion clock. The input image signal from the terminal device is also provided to a synchronous signal separating means 173, where the synchronous signal is separated from the image signal so that the respective means in the master device may be actuated on the basis of this synchronous signal. At the address formation means 175 to which the synchronous signal from the separating means 173 is provided, there are formed two-dimensional addresses (X,Y) which are of before the correction of distortion and comprise an X address in the horizontal direction and a Y address in the vertical directions. As these addresses (X,Y) are input into an address converting means 174, the distortion only in the horizontal X directions is corrected, and the address converting means 174 provides converted two-dimensional addresses (x,Y) of converted horizontal address x and the non-converted vertical address Y.

More practically, the address converting means 174 is adapted to formularize the image distortion characteristics due to the wide angle lens or the like for computing the converted addresses and to preliminarily store integer portion of a result of the computation in a memory table. In this case, decimal portion of the computation result for the onverted addresses is stored in an interpolation coefficient table 176 for being read out as a correction coefficient at the same time when the memory table in the address converting means 174 is accessed. When a high speed operational circuit capable of operating in real number the converted addresses at real time is employed as the address converting means 174, it becomes unnecessary to preliminarily store the integer portion of the computation result in the address converting memory table, nor to preliminarily store the decimal portion of the result in the interpolation coefficient table 176, but the integer portion itself of the operational circuit output may be made to be the converted addresses while the decimal portion as it is may be employed as the correction coefficient.

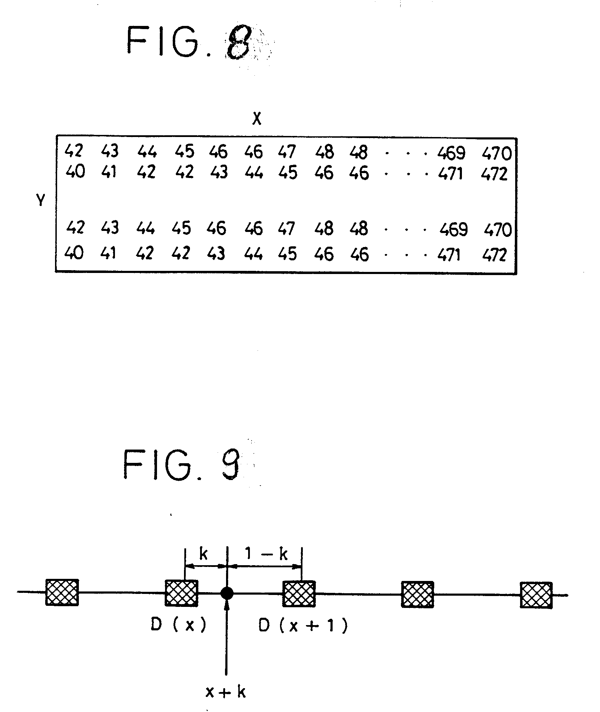

The memory table in the above address converting means 174 will be of such arrangement as shown in FIG. 8, in which the data "x" read out in correspondence with the two-dimensional addresses (X,Y) are made to be the corrected horizontal addresses of the image signal to be referred to. Since at this time only the single dimensional address conversion is carried out, the vertical addresses are of the initial Y only. Provided that the two-dimensional addresses (X,Y) from the address formation means 175 are (2,1), the data x written in the memory table as in FIG. 8 will be 43, and the converted two-dimensional addresses (x,Y) to be referred to will be (43,1). While in the present arrangement the image data are sequentially written into the input image data buffer 172, it may be also possible to employ a system of reading the written data simultaneously with the writing, reading the data after completion of the writing of the data for each horizontal line, or the like. In the case of such simultaneously reading system, the reading is carried out up to the converted reference addresses (x,Y) obtained from the address converting means 174, and the data of such reference addresses (x,Y) and of next addresses (x+1,Y) are provided to an interpolation operating means 177 where, when the memory table of FIG. 8 is employed, the data of (43,1) and (44,1) are to be provided to the interpolation operating means 177.

In this interpolation operating means 177, picture element values (the brightness here) of the converted coordinates are calculated on the basis of the interpolation coefficient and the respective data of the reference addresses and next addresses, and results of the calculation are stored in the image memory 178. In FIGS. 9 and 10, there are shown examples of the interpolation operation. In an event where the distortion of image can be more or less approximated by means of a certain formula, the calculation result of the address conversion for correcting the distortion or, in other words, the converted coordinates will not be of integer number but of the real number including the decimal portion, and no accurate picture element value can be obtained even when the input image is referred to on the basis of the integer portion of the real number addresses, but this respect can be compensated for by the interpolation operating means 177 in the present embodiment. Here, it is made possible to obtain more accurate picture element values by executing the linear interpolation with respect to two picture element values which are adjacent in the horizontal directions, for example. That is, when it is assumed that the calculation result of the converted two-dimensional addresses is (x+k) in which x is the integer portion and k is the decimal portion of the converted addresses, then the linear interpolation is to operate, as based on the picture element value D(x) at the address x and the picture element value D(x+1) at the address (x+1), such interpolation formula as

$$(1-k) \cdot D(x) + k \cdot D(x+1)$$

and operational results are made to be the picture element values after the address conversion. With this interpolation formula, it is intended to calculate, by means of the linear interpolation, the data of a point (x+k) which divides an interval between the both addresses x and (x+1) into k:(1-k), as seen in FIG. 9, from the data D(x) at the address x and the data D(x+1) at the address (x+1), and the weight with respect to the data D(x) taken on the ordinate and the weight with respect to the data D(x+1) taken on the abscissa are to vary in accordance with the interpolation coefficient k which can be presented by a straight line, as shown in FIG. 9.

The interpolation-calculated values operated as in the above are written in the addresses currently being processed at the image memory 178. The foregoing processings are sequentially carried out in a series so that the data for one picture component (1 frame or field) will be accumulated in the image memory 178, these data read out at a next frame or field and the image signal will be provided through the D/A converting means 179 and synchronous signal mixing means 173A.

It has been found that, according to the present embodiment, as will be clear from the above descriptions, the correction of distortion can be effectively carried out in the present embodiment only by the conversion of the single dimensional addresses, and the visual confirmation of the visitor on the monitor can be executed in a smooth manner. Further, the arrangement of the conversion required only for the addresses in the horizontal directions allows the storage of the input image data to be limited only to those for a single line, and it is possible to simplify the required hardware.

In the embodiment of FIG. 7, all other arrangement and their functions are the same as those in the respective embodiments which have been described.

## Claims

1. An interphone with a television monitor (24; 114), comprising a terminal device (10; 100) and a master device (20; 110) interconnected with the terminal device; wherein said terminal device comprises means (11; 101) for taking, with a wide angle lens (101 A) a wide angle image including an image of a visitor, and an output means to which an image signal of said wide angle image is provided from said image taking means; said master device comprising an A/D converting means (21; 111; 171) to which said image signal is provided from said output means, an image memory (22; 125, 126; 172) to which said image signal as digitalized at said A/D converting means is provided, a D/A converting means (23; 113; 179) to which said digitized image signal is provided from the image memory, and wherein the image signal again analogue-coded from said D/A converting means is provided to said monitor for reproducing said image; **characterized** in that the master device (20, 110) further comprises means (118; 175) for generating horizontal and vertical addresses (X, Y) to be provided to said image memory from the image signal supplied from said terminal device, the vertical addresses (Y) being generated by counting the horizontal synchronous signals as separated from the image signal, the horizontal addresses (X) being generated by counting sampling clocks of picture elements supplied by said master device, said sampling clocks being synchronized with said horizontal synchronous signals; and means (119; 174) for converting the horizontal addresses (X) into corrected horizontal addresses $(x^1)$ on the basis of predetermined distortion characteristics of the wide angle image due to the wide angle lens, the image signal being written into said image memory by means of the corrected horizontal addresses $(x^1)$ and the vertical addresses (Y) and read out by means of ordinary sequential addresses so that the horizontal direction is corrected on a real time basis, and the corrected image displayed on said monitor for an improved visual presentation of the visitor's image.

2. The interphone according to claim 1, characterized in that said master device further comprises an interpolation coefficient table (176) storing interpolation coefficients, and an interpolation operating means (177) for interpolating the image signal from said image memory by means of said interpolation coefficients on the basis of said corrected horizontal addresses $(x^1)$.

## Patentansprüche

1. Türfernsprechanlage mit einem Fernsehmonitor (24; 114), umfassend eine Endgerätvorrichtung (10; 100) und eine Hauptvorrichtung (20; 110), die mit der Endgerätvorrichtung verbunden ist; worin die Endgerätvorrichtung Einrichtungen (11; 101) zum Aufnehmen eines Weitwinkelbildes, das ein Bild eines Besuchers beinhaltet, mit einer Weitwinkellinse (101A) und eine Ausgangseinrichtung umfaßt, an welche ein Bildsignal des Weitwinkelbildes von der Bildaufnahmeeinrichtung geliefert wird, wobei die Hauptvorrichtung eine A/D-Umwandlungseinrichtung (21; 111; 171), zu welcher das Bildsignal von der Ausgangseinrichtung geliefert wird, einen Bildspeicher (22; 125, 126; 172), zu welchem das Bildsignal digitalisiert durch die A/D-Umwandlungseinrichtung geliefert wird, eine D/A-Umwandlungseinrichtung (23; 113; 179), zu welcher das digitalisierte Bildsignal von dem Bildspeicher geliefert wird, umfaßt, und worin das Bildsignal wiederum von der D/A-Umwandlungseinrichtung analog kodiert zu dem Monitor zur Wiederherstellung des Bildes geliefert wird; **gekennzeichnet dadurch, daß** die Hauptvorrichtung (20; 110) weiterhin Einrichtungen (118; 175) zum Erzeugen horizontaler und vertikaler Adressen (X, Y) umfaßt, um an dem Bildspeicher von dem Bildsignal, das von der Endgerätvorrichtung geliefert wird, zu liefern, wobei die vertikalen Adressen (Y) durch Zählen der horizontalen synchronen Signale, wie sie von dem Bildsignal getrennt werden, erzeugt werden, die horizontalen Adressen (X) durch Zählen der Abtasttakte der Bildelemente, die durch die Hauptvorrichtung geliefert werden, erzeugt werden, wobei die Abtasttakte mit den horizontalen synchronen Signalen synchronisiert werden; und Einrichtung (119; 174) zum Umwandeln der horizontalen Adressen (X) in korrigierte horizontale Adressen ($x^1$) auf der Basis der vorbestimmten Verzerrungskennzeichen des Weitwinkelbildes aufgrund der Weitwinkellinse, wobei das Bildsignal in den Bildspeicher mit Hilfe der korrigierten horizontalen Adressen ($x^1$) und der vertikalen Adressen (Y) geschrieben wird und mit Hilfe von gewöhnlichen sequentiellen Adressen ausgelesen wird, so daß die horizontale Richtung auf einer Realzeitbasis korrigiert wird, und das korrigierte Bild auf dem Monitor für eine verbesserte visuelle Darstellung des Bildes des Besuchers angezeigt wird.

2. Türfernsprechstelle nach Anspruch 1, **gekennzeichnet dadurch, daß** die Hauptvorrichtung weiterhin eine Interpolationskoeffiziententabelle (176), die Interpolationskoeffizienten speichert, und eine Interpolationsfunktionseinrichtung (177) zum Interpolieren des Bildsignales von dem Bildspeicher mit Hilfe der Interpolationskoeffizienten auf der Basis der korrigierten horizontalen Adressen ($x^1$) umfaßt.

**Revendications**

1. Interphone équipé d'un moniteur de télévision (24; 114), comprenant un dispositif terminal (10;100) et un dispositif maître (20;110) interconnecté au dispositif terminal; dans lequel ledit dispositif terminal comprend des moyens (11;101) pour prendre, avec un objectif grand-angle (101 A), une image sous un grand angle incluant une image d'un visiteur, et des moyens de sortie, auxquels un signal d'image de ladite image prise sous un grand angle est délivrée par lesdits moyens de prise de vues; ledit dispositif maître comportant des moyens de conversion analogique/numérique (21; 111; 171), auxquels ledit signal d'image est délivré par lesdits moyens de sortie, une mémoire d'images (22; 125, 126; 172), à laquelle ledit signal d'image est envoyé sous sa forme numérisée dans lesdits moyens de conversion analogique/numérique, des moyens de conversion numérique/analogique (23;113;179) auxquels ledit signal d'image numérisé est délivré par la mémoire d'images, et dans lequel le signal d'image à nouveau codé de façon analogique par lesdits moyens de conversion numérique/analogique est envoyé audit moniteur pour reproduire ladite image; caractérisé en ce que le dispositif maître (20,110) comprend en outre des moyens (118;175) pour produire les adresses horizontales et verticales (X,Y) devant être envoyées à ladite mémoire d'images à partir du signal d'image délivré par ledit dispositif terminal, les adresses verticales (Y) étant produites par comptage des signaux synchrones horizontaux, tels qu'ils sont séparés du signal d'image, les adresses horizontales (X) étant produites par comptage d'impulsions d'horloge d'échantillonnage d'éléments d'image délivrées par ledit dispositif maître, lesdites impulsions d'horloge d'échantillonnage étant synchronisées sur lesdits signaux synchrones horizontaux; et des moyens (119;174) pour convertir les adresses horizontales (X) en des adresses horizontales corrigées ($x^1$) sur la base d'une caractéristique de distorsion prédéterminée de l'image prise sous un grand angle produite par la lentille à grand-angle, le signal d'image étant écrit dans ladite mémoire d'images au moyen des adresses horizontales corrigées ($x^1$) et des adresses verticales (Y) et lues au moyen d'adresses séquentielles ordinaires de sorte que la direction horizontale est corrigée sur une base en temps réel et que l'image corrigée est affichée sur ledit moniteur pour une présentation visuelle améliorée de l'image du visiteur.

2. Interphone selon la revendication 1, caractérisé en ce que ledit dispositif maître comporte en outre une table de coefficients d'interpolation (176) mémorisant des coefficients d'interpolation, et des moyens d'exécution d'interpolation (177) pour interpoler -le signal d'image délivré par ladite mémoire d'images au moyen desdits coefficients d'interpolation sur la base desdites adresses horizontales corrigées ($x^1$).

# FIG. 1

# FIG. 2

# FIG. 3a

SAMPLING
AREA

IA

IMAGE
INPUT
AREA

SA

SA

# FIG 3b

SA

K

# FIG 3c

# FIG. 4

SYNCHRONOUS·SEPARATING MEANS — 124

ADDRESS GENERATING MEANS — 118

ADDRESS CONVERTING TABLE — 119

X'Y'ADDRESS

101 IMAGE INPUT MEANS

IMAGE SAMPLING CLOCK

X Y ADDRESS

100

WIDE-ANGLE LENS 101A

A/D CONVERTING MEANS — 111

LINE MEMORY — 125

LINE MEMORY — 126

D/A CONVERTING MEANS — 113

MONITOR — 114

110

EP 0 497 428 B1

FIG. 5a

FIG. 5b

FIG. 5c

FIG. 6a

Q          P          R

FIG. 6b

Q          P          R

# FIG. 7

```
                    ┌──────────────┐
                    │   ADDRESS    │
                    │  FORMATION   │──175
                    │    MEANS     │
                    └──────────────┘
             ┌──────────┴──────────────┐
             ▼                          ▼
    ┌──────────────┐          ┌──────────────────┐
    │   ADDRESS    │──174     │  INTERPOLATION   │──176
    │  CONVERTING  │          │   COEFFICIENT    │
    │    MEANS     │          │     TABLE        │
    └──────────────┘          └──────────────────┘
             │                          │        ┌ ─ ─ ─ ─ 177
             ▼                          │        │
    ┌──────────────┐                    │     ┌─────┐   ┌─────┐
    │ INPUT  IMAGE │──172               │     │ 1-k │   │  k  │
    │ DATA  BUFFER │                    │     └─────┘   └─────┘
    └──────────────┘                    │        │         │
             │                          ▼        ▼         │
          INPUT IMAGE              ┌────────┐              │
          DATA ( n )      ────────▶│   ×    │              │
                                   └────────┘              ▼
          INPUT IMAGE                    │            ┌────────┐
          DATA ( n+1 )     ──────────────┴───────────▶│   ×    │
                                                      └────────┘
                                        │         │
                                        ▼         ▼
                                   ┌──────────────────┐
                                   │        +         │
                                   └──────────────────┘
                                            │      INTERPOLATION
    ┌──────────────┐                        │      OPERATING
    │     A/D      │──171                    │      MEANS
    │  CONVERTING  │                         │ ─ ─ ─ ─ ─ ─
    │    MEANS     │                         ▼
    └──────────────┘        173     ┌──────────────────┐
             │          ┌───────────│   IMAGE MEMORY   │──178
             │          │SYNCHRONOUS└──────────────────┘
             │          │SIGNAL              │
             │          │SEPARATING ┌──────────────────┐
             │          │MEANS      │      D/A         │──179
             │          └───────────│   CONVERTING     │
             │              │       │    MEANS         │
             │            173A      └──────────────────┘
             │       ┌───────────┐          │
             │       │SYNCHRONOUS│          │
             │       │ SIGNAL    │──────────│
             │       └───────────┘          ▼
     INPUT  IMAGE SIGNAL            OUTPUT IMAGE SIGNAL
```

13

# FIG. 8

X

| 42 | 43 | 44 | 45 | 46 | 46 | 47 | 48 | 48 | · | · | · | 469 | 470 |
| 40 | 41 | 42 | 42 | 43 | 44 | 45 | 46 | 46 | · | · | · | 471 | 472 |

Y

| 42 | 43 | 44 | 45 | 46 | 46 | 47 | 48 | 48 | · | · | · | 469 | 470 |
| 40 | 41 | 42 | 42 | 43 | 44 | 45 | 46 | 46 | · | · | · | 471 | 472 |

# FIG. 9

k  |  1 − k

D ( x )     D ( x + 1 )

x + k

FIG. 10